# EUROPEAN PATENT APPLICATION

(11) **EP 4 772 983 A1**
(43) Date of publication of application: **08.07.2026**
(21) Application number: 24858296.7
(22) Date of filing: 13.08.2024
(51) Int. Cl.: G06F 3/04842

(54) **CONTENT DISPLAY METHOD AND APPARATUS, DEVICE, COMPUTER-READABLE STORAGE MEDIUM, AND PRODUCT**

(30) Priority: 31.08.2023 CN 202311119171
(71) Applicant: Beijing Zitiao Network Technology Co., Ltd., Beijing 100190 (CN)
(72) Inventor: YUE, Yang, Beijing 100028 (CN); LI, Binbin, Beijing 100028 (CN); HU, Lingxin, Beijing 100028 (CN); ZHU, Yixuan, Beijing 100028 (CN)
(74) Representative: Marks & Clerk LLP
(86) International application number: PCT/CN2024/111732
(87) International publication number: WO 2025/044753

(57) **Abstract**

A content display method and apparatus, a device, a computer-readable storage medium, and a product. The method comprises: displaying a content display page, displaying at least one try-on item in the content display page, displaying content associated with any try-on item, and hiding content associated with other try-on items; acquiring at least one piece of try-on content corresponding to at least one try-on item and generated by a user triggering the at least one try-on item; in response to a trigger operation of the user on a preset synthesis control in the content display page, carrying out an image synthesis operation on the basis of at least one piece of try-on content corresponding to each try-on item, to obtain at least one try-on result image; and displaying the at least one try-on result image in the content display page.

## Description

### CROSS-REFERENCE TO RELATED APPLICATION

The present application claims priority to Chinese Patent Application No. 202311119171.1, filed on August 31, 2023, which is incorporated herein by reference in its entirety as a part of the present application.

### TECHNICAL FIELD

Embodiments of the present disclosure relate to the technical field of interface interaction, and in particular to a content display method and apparatus, a device, a computer-readable storage medium, and a product.

### BACKGROUND

With the continuous advancement of artificial intelligence technology, users may implement an online virtual try-on operation through an artificial intelligence application.

Since a large amount of content needs to be displayed during try-on, virtual try-on is generally implemented on a large-screen terminal device such as a computer, which makes it impossible for the users to conveniently implement the virtual try-on operation using a handheld terminal device. In addition, the current virtual try-on operation may generally only allow try-on images to be generated based on preset try-on templates and clothing selected by the user. Consequently, the generated try-on images are typically undiversified, thereby failing to satisfy the users' actual needs.

### SUMMARY

Embodiments of the present disclosure provide a content display method and apparatus, a device, a computer-readable storage medium, and a product, so as to solve the technical problems that few content is displayed in an interface and generated try-on images are undiversified in existing try-on methods.

According to a first aspect, an embodiment of the present disclosure provides a content display method. The method includes:
displaying a preset content display page, displaying at least one try-on item on the content display page, displaying content associated with any try-on item, and hiding content associated with other try-on items;
obtaining at least one piece of try-on content corresponding to the at least one try-on item and generated by a user triggering the at least one try-on item;
in response to a trigger operation of the user on a preset synthesis control on the content display page, performing an image synthesis operation based on at least one piece of try-on content corresponding to each try-on item, to obtain at least one try-on result image; and
displaying the at least one try-on result image on the content display page.

According to a second aspect, an embodiment of the present disclosure provides a content display apparatus. The apparatus includes:
a display module configured to display a preset content display page, display at least one try-on item on the content display page, display content associated with any try-on item, and hide content associated with other try-on items;
an obtaining module configured to obtain at least one piece of try-on content corresponding to the at least one try-on item and generated by a user triggering the at least one try-on item;
a synthesis module configured to, in response to a trigger operation of the user on a preset synthesis control on the content display page, perform an image synthesis operation based on at least one piece of try-on content corresponding to each try-on item, to obtain at least one try-on result image; and
a processing module configured to display the at least one try-on result image on the content display page.

According to a third aspect, an embodiment of the present disclosure provides an electronic device. The electronic device includes: a processor and a memory, where the memory stores computer-executable instructions; and
the processor executes the computer-executable instructions stored in the memory, to cause the at least one processor to perform the content display method according to the first aspect and various possible designs of the first aspect.

According to a fourth aspect, an embodiment of the present disclosure provides a computer-readable storage medium. The computer-readable storage medium has stored therein computer-executable instructions that, when executed by a processor, cause the content display method according to the first aspect and various possible designs of the first aspect to be implemented.

According to a fifth aspect, an embodiment of the present disclosure provides a computer program product including a computer program, where the computer program, when executed by a processor, causes the content display method according to the first aspect and various possible designs of the first aspect to be implemented.

In the content display method and apparatus, the device, the computer-readable storage medium, and the computer program product provided in the embodiments, the at least one try-on item and the content associated with any try-on item are displayed on the content display page, and the content associated with the other try-on items is hidden, such that more content can be displayed on the content display page, and a virtual try-on operation can thus be implemented on a handheld device. Further, the at least one piece of try-on content corresponding to the at least one try-on item and generated by the user triggering the at least one try-on item is obtained, and the image synthesis operation is performed based on the at least one piece of try-on content corresponding to each try-on item, to obtain the at least one try-on result image, such that the at least one try-on result image may be generated based on the try-on content determined by the user, making the try-on result image more in line with personalized needs of the user, thereby improving the user experience.

### BRIEF DESCRIPTION OF DRAWINGS

**In** order to describe the technical solutions in embodiments of the present disclosure or in the related art more clearly, the accompanying drawings for describing the embodiments or the related art are briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a content display method according to an embodiment of the present disclosure;
FIG. 2 is a schematic diagram of interface interaction according to an embodiment of the present disclosure;
FIG. 3 is a schematic flowchart of a content display method according to another embodiment of the present disclosure;
FIG. 4 is another schematic diagram of interface interaction according to an embodiment of the present disclosure;
FIG. 5 is a schematic diagram of a display interface according to an embodiment of the present disclosure;
FIG. 6 is another schematic diagram of interface interaction according to an embodiment of the present disclosure;
FIG. 7 is a schematic flowchart of a content display method according to another embodiment of the present disclosure;
FIG. 8 is a schematic structural diagram of a content display apparatus according to an embodiment of the present disclosure; and
FIG. 9 is a schematic structural diagram of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include", "comprise" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

In order to solve the technical problems that few content is displayed in an interface and generated try-on images are undiversified in existing try-on methods, the present disclosure provides a content display method and apparatus, a device, a computer-readable storage medium, and a product.

It should be noted that the content display method and apparatus, the device, the computer-readable storage medium, and the product provided in the present disclosure can be applied to any online try-on application scenario.

Due to a large amount of content to be displayed and a complex algorithm, the existing try-on methods are generally implemented in a large-screen terminal device with a strong computing capability, and cannot be implemented in a client installed on a handheld device.

In solving the above technical problems, the inventor(s) has found through research that, to enable a virtual try-on operation to be implemented on the client in the handheld terminal device, at least one try-on item may be displayed in a content display interface, content associated with any try-on item is displayed, and content associated with other try-on items is hidden. As such, a user may perform switching between pieces of try-on content corresponding to different try-on items for viewing according to actual needs. Therefore, more pieces of try-on content can be displayed within a limited display interface.

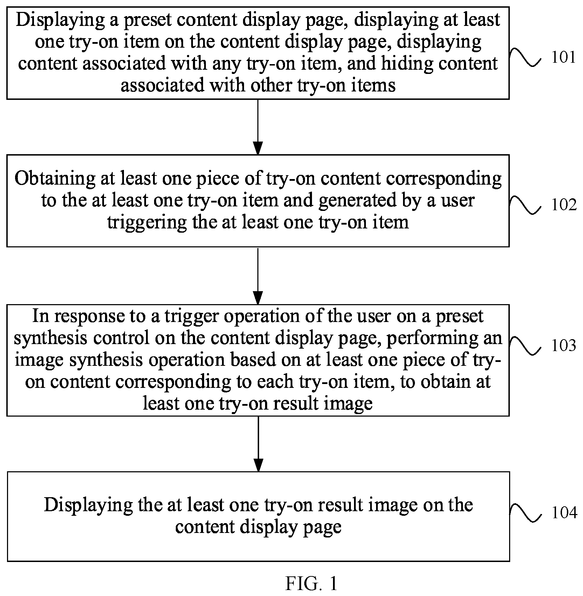

FIG. 1 is a schematic flowchart of a content display method according to an embodiment of the present disclosure. As shown in FIG. 1, the method includes the following steps.

Step 101: Displaying a preset content display page, displaying at least one try-on item on the content display page, displaying content associated with any try-on item, and hiding content associated with other try-on items.

An execution entity of this embodiment is a content display apparatus. The content display apparatus may be coupled to a terminal device. Therefore, the content display in the try-on operation can be performed based on a trigger operation of the user on the terminal device. Alternatively, the content display apparatus may be coupled to a server communicatively connected to the terminal device. Therefore, a content display instruction sent by the terminal device based on a trigger operation of the user can be obtained. Then, the terminal device is controlled based on the content display instruction to perform the content display in the try-on operation.

In this implementation, the preset content display page may be displayed in a virtual try-on process. For example, the preset content display page may be displayed in response to a trigger operation of the user on a preset try-on control, or may be displayed based on a trigger operation of the user on a preset try-on link. However, the embodiments of the present disclosure are not limited thereto.

At least one try-on item may be displayed on the content display page. For example, the try-on item may include a virtual model item, a try-on pose item, a clothing item, and a try-on scenario item.

A handheld terminal device such as a mobile phone generally has a small display interface. To enable a try-on operation to be implemented on the handheld device, the content associated with any try-on item may be displayed on the content display page, and the content associated with the other try-on items may be hidden.

Through the above-mentioned display interface, the user may perform the trigger operation on the try-on item according to actual needs, to view the content associated with the try-on item that is currently hidden.

Step 102: Obtaining at least one piece of try-on content corresponding to the at least one try-on item and generated by a user triggering the at least one try-on item.

In this implementation, after the at least one try-on item is displayed, the user may perform the trigger operation on the try-on item according to actual needs, to generate the at least one piece of try-on content corresponding to the at least one try-on item based on corresponding content associated with each try-on item.

For example, the virtual model item may correspond to at least one candidate virtual model. The try-on pose item may correspond to at least one preset candidate try-on pose. The try-on scenario item may correspond to at least one preset candidate try-on scenario. The clothing item may correspond to a preset generation control, such that the user selects an image to be processed according to actual needs and then determines try-on clothing based on the image to be processed.

For example, the user may perform a trigger operation on the virtual model item, to view the at least one candidate virtual model corresponding to the virtual model item. **In** response to a selection operation of the user for the at least one candidate virtual model, at least one piece of try-on content corresponding to the virtual model item may be obtained.

Step 103: In response to a trigger operation of the user on a preset synthesis control on the content display page, performing an image synthesis operation based on at least one piece of try-on content corresponding to each try-on item, to obtain at least one try-on result image.

In this implementation, the synthesis control is further provided on the content display content. After generating the at least one piece of try-on content, the user may perform the trigger operation on the synthesis control.

In response to the trigger operation, the image synthesis operation may be performed based on the at least one piece of try-on content corresponding to each try-on item, to obtain the at least one try-on result image. Therefore, for each piece of try-on clothing, try-on result images may be generated for each virtual model wearing the try-on clothing and making different poses in different try-on scenarios. Thus, richer and more comprehensive try-on result images are obtained.

Step 104: Displaying the at least one try-on result image on the content display page.

In this implementation, to enable the user to view current try-on results more directly, the at least one try-on result image may be displayed on the content display page after the at least one try-on result image is obtained.

Optionally, on the basis of any one of the above-mentioned embodiments, step 103 includes: for each piece of try-on clothing, performing an operation of combining the try-on clothing with each virtual model, each try-on pose, and each try-on scenario, to obtain a plurality of try-on result images corresponding to the try-on clothing.

In this embodiment, to enable the generation of more comprehensive try-on result images, after the at least one piece of try-on content is obtained, for each piece of try-on clothing, the operation of combining the try-on clothing with each virtual model, each try-on pose, and each try-on scenario is performed to obtain the plurality of try-on result images corresponding to the try-on clothing.

That is, for each piece of try-on clothing, the try-on result images may be generated for each virtual model wearing the try-on clothing and making different poses in different try-on scenarios.

Further, on the basis of any one of the above-mentioned embodiments, after step 101, the method further includes:
displaying preset prompt information on the content display page in response to determining that the user triggers a try-on operation for the first time.

The prompt information is used to instruct the user to generate the at least one piece of try-on content based on the at least one try-on item on the content display page according to the prompt information.

In this embodiment, since the user may be unclear about an operation process of the try-on operation when performing the try-on operation for the first time, the user may be unable to implement the try-on operation accurately. Therefore, to improve the efficiency of the try-on operation such that the user performs the try-on operation more directly, the preset prompt information may be displayed on the content display page in response to determining that the user triggers the try-on operation for the first time. The prompt information is used to instruct the user to generate the at least one piece of try-on content based on the at least one try-on item on the content display page according to the prompt information.

For example, the prompt information may be used to instruct the user to select virtual model content first, followed by try-on clothing, and then a try-on pose and a try-on scenario. The plurality of try-on result images are generated based on the selected try-on content.

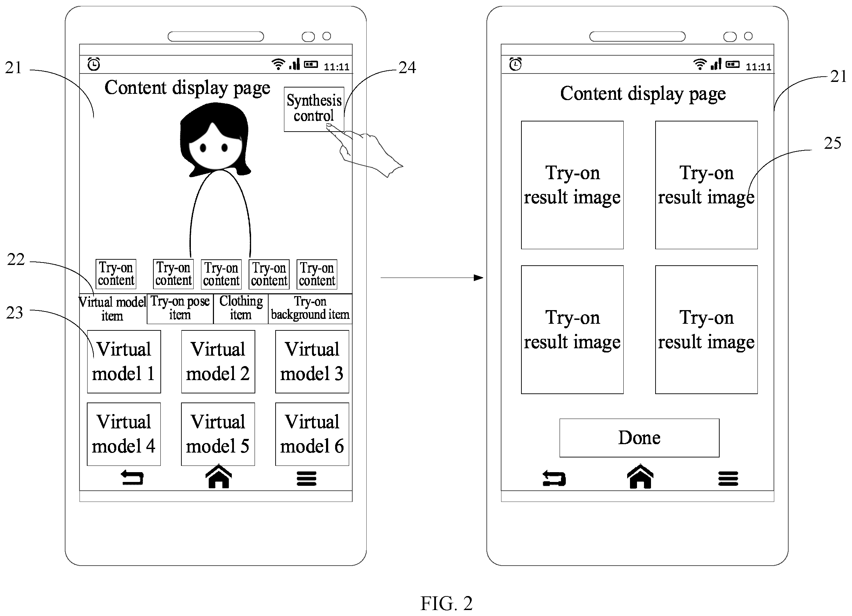

FIG. 2 is a schematic diagram of interface interaction according to an embodiment of the present disclosure. As shown in FIG. 2, a content display page 21 includes at least one try-on item 22 and content 23 associated with any try-on item. For example, at least one piece of try-on pose content corresponding to the try-on pose item may be displayed. The user may perform a trigger operation on the try-on item 22 according to actual needs, to view and select the corresponding content associated with the try-on item 22. Therefore, the user can generate the at least one piece of try-on content based on the at least one try-on item 22. A preset synthesis control 24 is further provided on the content display page 21. In response to a trigger operation of the user on the synthesis control 24, an image synthesis operation may be performed based on the at least one piece of try-on content corresponding to each try-on item, to obtain at least one try-on result image 25. Then, the at least one try-on result image 25 is displayed on the content display page 21.

In the content display method provided in this embodiment, the at least one try-on item and the content associated with any try-on item are displayed on the content display page, and the content associated with the other try-on items is hidden, such that more content can be displayed on the content display page, and a virtual try-on operation can thus be implemented on the handheld device. Further, the at least one piece of try-on content corresponding to the at least one try-on item and generated by the user triggering the at least one try-on item is obtained, and the image synthesis operation is performed based on the at least one piece of try-on content corresponding to each try-on item, to obtain the at least one try-on result image, such that the at least one try-on result image may be generated based on the try-on content determined by the user, making the try-on result image more in line with personalized needs of the user, thereby improving the user experience.

Optionally, on the basis of any one of the above-mentioned embodiments, the try-on item includes the virtual model item.

Step 102 includes:
in response to a trigger operation of the user on the virtual model item, displaying at least one preset candidate virtual model on the content display page; and
in response to a selection operation of the user for the at least one candidate virtual model, obtaining the at least one piece of try-on content corresponding to the virtual model item.

Alternatively, step 102 includes:
in response to a trigger operation of the user on the virtual model item, display, on the content display page, at least one virtual model selected by the user when performing a historical try-on operation; and
determining the at least one virtual model historically selected by the user as at least one piece of try-on content corresponding to the virtual model item.

In this embodiment, the try-on item includes the virtual model item. Corresponding content associated with the virtual model item may be at least one candidate virtual model.

Optionally, the user may select at least one piece of try-on content from the at least one candidate virtual model according to actual needs. In response to the trigger operation of the user on the virtual model item, the at least one preset candidate virtual model is displayed on the content display page. In response to the selection operation of the user for the at least one candidate virtual model, the at least one piece of try-on content corresponding to the virtual model item is obtained.

Alternatively, the at least one virtual model used by the user when performing the historical try-on operation may be obtained as the at least one piece of try-on content. In response to the trigger operation of the user on the virtual model item, the at least one virtual model selected by the user when performing the historical try-on operation is displayed on the content display page. The at least one virtual model selected during the historical try-on operation may be saved by the user when performing the historical try-on operation. The at least one virtual model historically selected by the user is determined as the at least one piece of try-on content corresponding to the virtual model item.

In the content display method provided in this embodiment, the at least one piece of try-on content corresponding to the virtual model item is determined based on the selection operation of the user, such that the generated try-on result image is more in line with the personalized needs of the user. The at least one piece of try-on content corresponding to the virtual model item is determined based on the historical try-on operation, such that the generated try-on result image is more in line with the personalized needs of the user, and the operation process of the try-on operation can also be simplified, thereby improving the efficiency of the try-on operation.

Optionally, on the basis of any one of the above-mentioned embodiments, the try-on item includes the try-on pose item.

Step 102 includes:
in response to a trigger operation of the user on the try-on pose item, displaying at least one preset candidate try-on pose on the content display page; and
in response to a selection operation of the user for the at least one candidate try-on pose, obtaining at least one piece of try-on content corresponding to the try-on pose item.

Alternatively, step 102 includes:
in response to a trigger operation of the user on the try-on pose item, displaying, on the content display page, at least one try-on pose selected by the user when performing a historical try-on operation; and
determining the at least one try-on pose historically selected by the user as at least one piece of try-on content corresponding to the try-on pose item.

In this embodiment, the try-on item includes the try-on pose item. Corresponding content associated with the try-on pose item may be at least one preset try-on pose.

Optionally, the user may select at least one piece of try-on content from the at least one preset try-on pose according to actual needs. In response to the trigger operation of the user on the try-on pose item, the at least one preset candidate try-on pose is displayed on the content display page. In response to the selection operation of the user for the at least one candidate try-on pose, the at least one piece of try-on content corresponding to the try-on pose item is obtained.

Alternatively, the at least one try-on pose used by the user when performing the historical try-on operation may be obtained as the at least one piece of try-on content. In response to the trigger operation of the user on the try-on pose item, the at least one try-on pose selected by the user when performing the historical try-on operation is displayed on the content display page. The at least one try-on pose historically selected by the user is determined as the at least one piece of try-on content corresponding to the try-on pose item.

In the content display method provided in this embodiment, the at least one piece of try-on content corresponding to the try-on pose item is determined based on the selection operation of the user, such that the generated try-on result image is more in line with the personalized needs of the user. The at least one piece of try-on content corresponding to the try-on pose item is determined based on the historical try-on operation, such that the generated try-on result image is more in line with the personalized needs of the user, and the operation process of the try-on operation can also be simplified, thereby improving the efficiency of the try-on operation.

Optionally, on the basis of any one of the above-mentioned embodiments, the try-on item includes the try-on background item.

Step 102 includes:
in response to a trigger operation of the user on the try-on background item, displaying at least one preset candidate try-on background on the content display page; and
in response to a selection operation of the user for the at least one candidate try-on background, obtaining at least one piece of try-on content corresponding to the try-on background item.

Alternatively, step 102 includes:
in response to a trigger operation of the user on the try-on background item, displaying, on the content display page, at least one try-on background selected by the user when performing a historical try-on operation; and
determining the at least one try-on background historically selected by the user as at least one piece of try-on content corresponding to the try-on background item.

In this embodiment, the try-on item includes the try-on background item. Corresponding content associated with the try-on background item may be at least one try-on background.

Optionally, the user may select at least one piece of try-on content from the at least one try-on background according to actual needs. In response to the trigger operation of the user on the try-on background item, the at least one preset candidate try-on background is displayed on the content display page. In response to the selection operation of the user for the at least one candidate try-on background, the at least one piece of try-on content corresponding to the try-on background item is obtained.

Alternatively, the at least one try-on background used by the user when performing the historical try-on operation may be obtained as the at least one piece of try-on content. In response to the trigger operation of the user on the try-on background item, the at least one try-on background selected by the user when performing the historical try-on operation is displayed on the content display page. The at least one try-on background historically selected by the user is determined as the at least one piece of try-on content corresponding to the try-on background item.

In the content display method provided in this embodiment, the at least one piece of try-on content corresponding to the try-on background item is determined based on the selection operation of the user, such that the generated try-on result image is more in line with the personalized needs of the user. The at least one piece of try-on content corresponding to the try-on background item is determined based on the historical try-on operation, such that the generated try-on result image is more in line with the personalized needs of the user, and the operation process of the try-on operation can also be simplified, thereby improving the efficiency of the try-on operation.

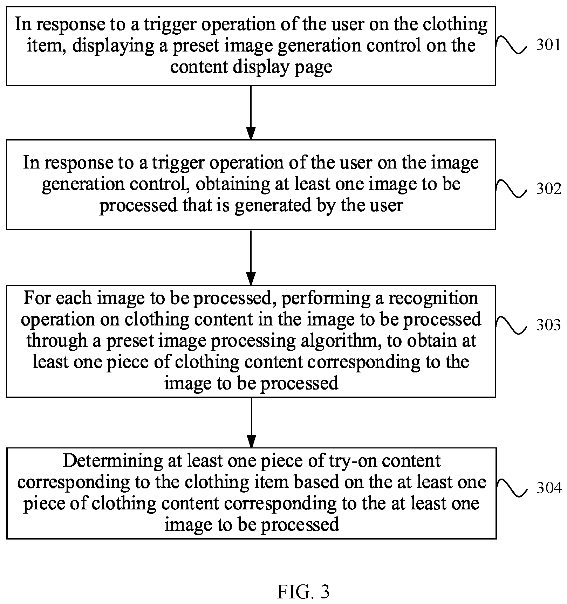

FIG. 3 is a schematic flowchart of a content display method according to another embodiment of the present disclosure. On the basis of any one of the above-mentioned embodiments, the try-on item includes a clothing item. Step 102 includes:
step 301: in response to a trigger operation of the user on the clothing item, displaying a preset image generation control on the content display page;
step 302: in response to a trigger operation of the user on the image generation control, obtaining at least one image to be processed that is generated by the user;
step 303: for each image to be processed, performing a recognition operation on clothing content in the image to be processed through a preset image processing algorithm, to obtain at least one piece of clothing content corresponding to the image to be processed; and
step 304: determining at least one piece of try-on content corresponding to the clothing item based on the at least one piece of clothing content corresponding to the at least one image to be processed.

In this embodiment, the try-on item includes the clothing item. Corresponding content associated with the clothing item may be the image generation control. The user may generate the image to be processed through the image generation control, such that the at least one piece of try-on content may be obtained based on the image to be processed.

Optionally, in response to the trigger operation of the user on the clothing item, the preset image generation control may be displayed on the content display page. In response to the trigger operation of the user on the image generation control, the at least one image to be processed that is generated by the user is obtained. The at least one image to be processed may be uploaded by the user, or may be captured by the user in real time. However, the embodiments of the present disclosure are not limited thereto.

Further, for each image to be processed, the recognition operation may be performed on the clothing content in the image to be processed through the preset image processing algorithm, to obtain the at least one piece of clothing content corresponding to the image to be processed. The at least one piece of clothing content may be obtained using any algorithm capable of clothing recognition and image matting, and the embodiments of the present disclosure are not limited thereto. The at least one piece of try-on content corresponding to the clothing item is determined based on the at least one piece of clothing content corresponding to the at least one image to be processed.

In the content display method provided in this embodiment, the at least one piece of try-on content corresponding to the clothing item is determined based on the image to be processed that is generated by the user, such that the try-on content in the current try-on operation is more in line with the personalized needs of the user.

Further, on the basis of any one of the above-mentioned embodiments, step 304 includes:
displaying, on the content display page, the at least one piece of clothing content corresponding to the at least one image to be processed; and
in response to a selection operation triggered by the user for the at least one piece of clothing content, determining at least one piece of target clothing content currently selected by the user as the at least one piece of try-on content corresponding to the clothing item.

In this embodiment, after the at least one piece of clothing content is obtained based on the at least one image to be processed, the at least one piece of clothing content corresponding to the at least one image to be processed may also be displayed on the content display page, in order to make the try-on operation more in line with the personalized needs of the user. In response to the selection operation triggered by the user for the at least one piece of clothing content, the at least one piece of target clothing content currently selected by the user is determined as the at least one piece of try-on content corresponding to the clothing item.

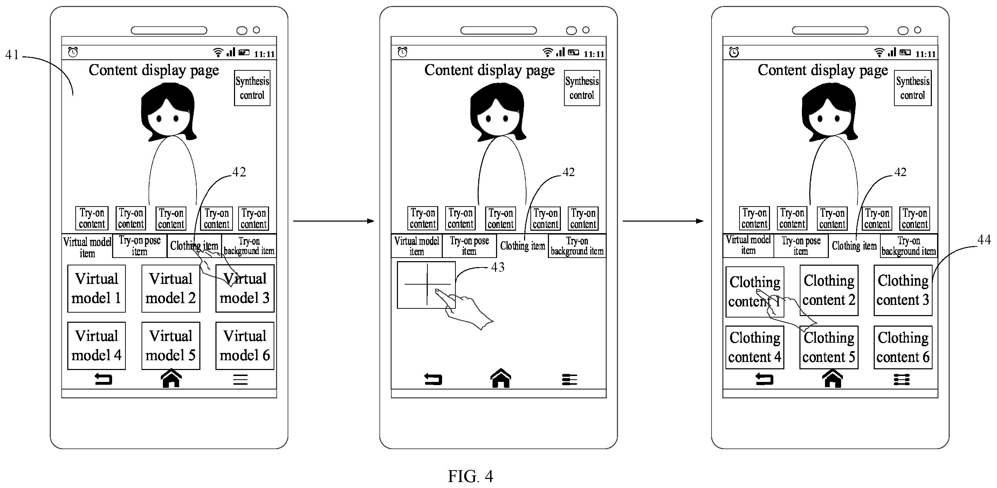

FIG. 4 is another schematic diagram of interface interaction according to an embodiment of the present disclosure. As shown in FIG. 4, in response to a trigger operation of the user on a clothing item 42 on a content display page 41, an image generation control 43 may be displayed on the content display page 41. In response to a trigger operation of the user on the image generation control 43, at least one image to be processed that is generated by the user may be obtained. At least one piece of clothing content 44 corresponding to the at least one image to be processed is displayed on the content display page 41. In response to a selection operation triggered by the user for the at least one piece of clothing content 44, at least one piece of target clothing content 44 currently selected by the user is determined as at least one piece of try-on content corresponding to the clothing item.

In the content display method provided in this embodiment, the at least one piece of clothing content corresponding to the at least one image to be processed is displayed on the content display page. In response to the selection operation triggered by the user for the at least one piece of clothing content, the at least one piece of target clothing content currently selected by the user is determined as the at least one piece of try-on content corresponding to the clothing item. Therefore, interaction methods on the content display page can be enriched, and the try-on content in the current try-on operation can be more in line with the personalized needs of the user.

Further, on the basis of any one of the above-mentioned embodiments, the content display page further includes a preset edit control.

After displaying, on the content display page, the at least one piece of clothing content corresponding to the at least one image to be processed, the method further includes:
in response to the selection operation triggered by the user for the at least one piece of clothing content, determining the at least one piece of target clothing content currently selected by the user;
displaying a preset edit page in response to a trigger operation of the user on the edit control; and
obtaining edit content generated by the user on the edit page, and performing an edit operation on the at least one piece of target clothing content based on the edit content, to obtain the at least one piece of try-on content corresponding to the clothing item.

In this embodiment, in order to make the try-on clothing for try-on more in line with the personalized needs of the user and make the try-on clothing more accurate, after the at least one piece of clothing content is obtained, the user may also perform the edit operation on the at least one piece of clothing content.

Optionally, in response to the selection operation triggered by the user for the at least one piece of clothing content, the at least one piece of target clothing content currently selected by the user may be determined. The content display page may further include the preset edit control. The preset edit page is displayed in response to the trigger operation of the user on the edit control. The user may perform the edit operation, such as adjusting an edge or a color parameter of the at least one piece of target clothing content, on the edit page, so as to obtain the edit content.

Accordingly, the edit content generated by the user on the edit page may be obtained, and the edit operation may be performed on the at least one piece of target clothing content based on the edit content, to obtain the at least one piece of try-on content corresponding to the clothing item.

In the content display method provided in this embodiment, the edit operation is performed on the at least one piece of target clothing content based on the edit content generated by the user, such that the accuracy of the try-on content can be improved, and the try-on content is more in line with the personalized needs of the user, thereby improving the user experience.

Further, on the basis of any one of the above-mentioned embodiments, the content display page includes a first display region and a second display region.

For example, the first display region is used to display the at least one try-on item to be set and the content associated with any try-on item.

The second display region is used to display at least one piece of try-on clothing corresponding to the clothing item and currently generated by the user.

In this embodiment, to enable more display content to be displayed on the content display page, the content display page may be specifically divided into the first display region and the second display region.

Based on a structure of the interface described above, the at least one try-on item to be set and at least one piece of candidate try-on content that is associated with any try-on item may be displayed in the first display region. Moreover, the at least one piece of try-on clothing corresponding to the clothing item and currently generated by the user is displayed in the second display region.

Further, on the basis of any one of the above-mentioned embodiments, the second display region includes a first sub-region and a second sub-region.

For example, the first sub-region is used to display a thumbnail corresponding to the at least one piece of try-on clothing currently generated by the user.

The second sub-region is used to display a try-on display effect obtained based on at least one piece of try-on content currently determined by the user.

In this embodiment, to enable the user to view currently selected try-on content and an effect corresponding to the try-on content more directly, the second display region includes the first sub-region and the second sub-region.

Optionally, the thumbnail corresponding to the at least one piece of try-on clothing currently generated by the user may be displayed in the first sub-region. The second sub-region is used to display the try-on display effect obtained based on the at least one piece of try-on content currently determined by the user.

For example, the first sub-region may be displayed below the second sub-region.

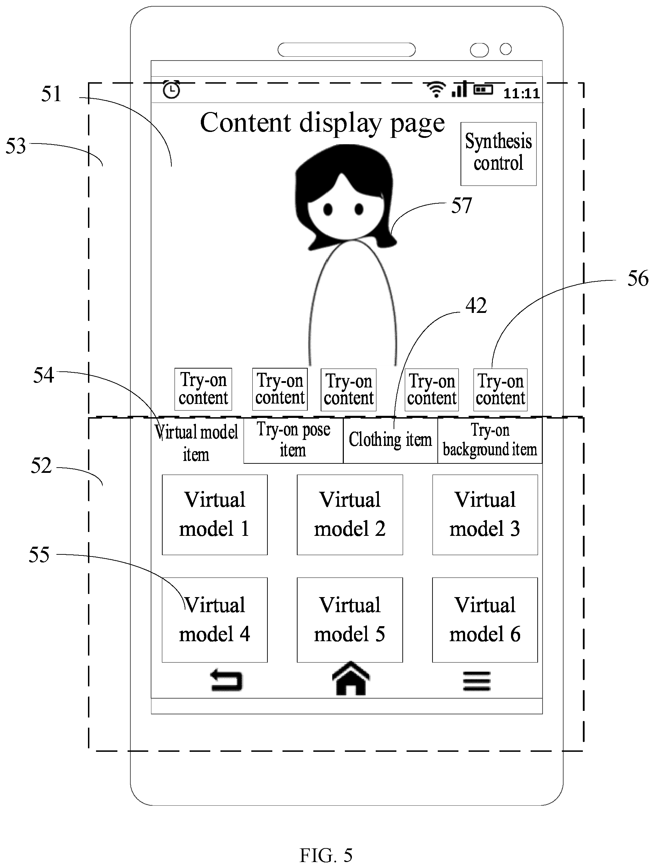

FIG. 5 is a schematic diagram of a display interface according to an embodiment of the present disclosure. As shown in FIG. 5, a content display page 51 includes a first display region 52 and a second display region 53. The first display region 52 is used to display at least one try-on item 54 to be set and at least one piece of candidate try-on content 55 that is associated with any try-on item. The second display region 53 is used to display at least one piece of try-on clothing 56 corresponding to a clothing item and currently generated by the user. The second display region 53 includes a first sub-region and a second sub-region. For example, the first sub-region is used to display a thumbnail 56 corresponding to the at least one piece of try-on clothing currently generated by the user. The second sub-region is used to display a try-on display effect 57 obtained based on at least one piece of try-on content currently determined by the user.

In the content display method provided in this embodiment, different display regions are provided on the content display page, such that the display content on the content display page can be enriched, and the try-on operation can thus be implemented on the handheld device.

Further, for example, on the basis of any one of the above-mentioned embodiments, the method further includes:
in response to a preset trigger operation of the user in the first display region, hiding the second sub-region, and increasing a display size of the first display region, such that display sizes corresponding to the adjusted first display region and the first sub-region match a display size of a display interface.

In this embodiment, during the process of the user generating the try-on content based on the try-on item, the size of the first display region may also be increased to enable the user to view the content associated with the try-on item more directly.

Optionally, in response to the preset trigger operation of the user in the first display region, the second sub-region is hidden, and the display size of the first display region is increased, such that the display sizes corresponding to the adjusted first display region and the first sub-region match the display size of the display interface. For example, the preset trigger operation may be a slide-up operation triggered at an edge of the first display region, the preset trigger operation may be a trigger operation on a preset expand control in the first display region, or the preset trigger operation may be a touch-and-hold operation, a drag operation, and other operations in the first display region. The embodiments of the present disclosure are not limited thereto.

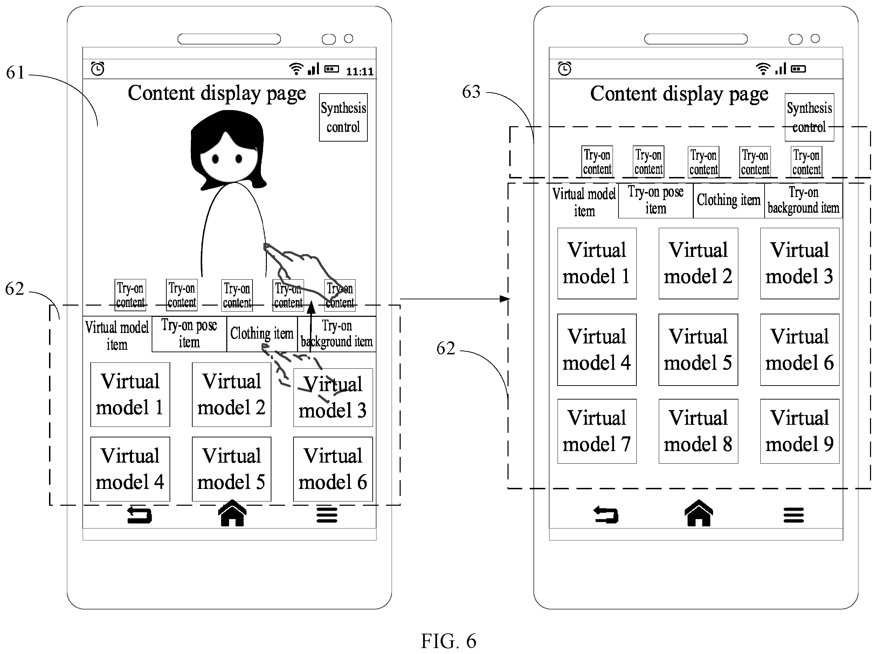

FIG. 6 is another schematic diagram of interface interaction according to an embodiment of the present disclosure. As shown in FIG. 6, in response to a slide-up operation triggered by the user at an edge of a first display region 62 on a content display page 61, a second sub-region may be hidden. A first sub-region 63 is displayed at the top of the content display page 61. Moreover, a display size of the first display region 62 is increased.

In the content display method provided in this embodiment, the second sub-region is hidden in response to the preset trigger operation of the user in the first display region, and the display size of the first display region is increased, such that the interaction methods on the content display page can be enriched, and the user can select the candidate try-on content more directly, thereby improving the user experience.

Further, for example, on the basis of any one of the above-mentioned embodiments, the method further includes:
in response to a selection operation of the user for any try-on item, determining a target try-on item currently selected by the user; and
displaying, on the content display page, the at least one try-on item and at least one piece of candidate try-on content that corresponds to the target try-on item.

In this embodiment, a plurality of try-on items and the content associated with any try-on item may be displayed on the content display page, and the content associated with other try-on items may be hidden. To enable more content to be displayed on the content display page, the user may view the currently hidden content associated with the try-on items according to actual needs.

Optionally, in response to the selection operation of the user for any try-on item, the target try-on item currently selected by the user may be determined. The at least one try-on item and the at least one piece of candidate try-on content that corresponds to the target try-on item are displayed on the content display page.

For example, the virtual model item may correspond to at least one candidate virtual model. The try-on pose item may correspond to at least one preset candidate try-on pose. The try-on scenario item may correspond to at least one preset candidate try-on scenario. The clothing item may correspond to a preset generation control, such that the user selects an image to be processed according to actual needs and then determines try-on clothing based on the image to be processed.

In the content display method provided in this embodiment, in response to the selection operation of the user for any try-on item, the target try-on item currently selected by the user is determined. The at least one try-on item and the at least one piece of candidate try-on content that corresponds to the target try-on item are displayed on the content display page, such that the interaction methods and display content on the content display page can be enriched, and the try-on operation can thus be implemented on the handheld device.

Further, for example, on the basis of any one of the above-mentioned embodiments, the method further includes:
in response to an outfit matching operation triggered by the user, displaying a preset outfit matching page, and displaying, on the outfit matching page, all pieces of try-on clothing currently generated by the user;
in response to a selection operation of the user on the outfit matching page, determining at least one piece of try-on clothing currently selected by the user as target outfit matching content; and
performing an operation of combining the target outfit matching content with each virtual model, each try-on pose, and each try-on scenario, to obtain a plurality of try-on result images corresponding to the target outfit matching content.

In this embodiment, during a try-on content generation process, the user may customize the generation of the at least one piece of try-on content according to actual needs. For example, the user may generate a plurality of tops and a plurality of bottoms in a single try-on process.

To make the generated try-on result image more in line with the actual needs of the user, the user may also customize clothing matching, such that the try-on result image may be generated based on the clothing matching customized by the user.

Optionally, the user may trigger the outfit matching operation on the content display page. For example, the user may trigger the outfit matching operation through a trigger operation on a preset outfit matching control, or may trigger the outfit matching operation through a preset trigger gesture. However, the embodiments of the present disclosure are not limited thereto.

Further, in response to the outfit matching operation, the preset outfit matching page may be displayed, and all the pieces of try-on clothing currently generated by the user are displayed on the outfit matching page. On the outfit matching page, all the pieces of try-on clothing may be classified for display according to the categories of tops and bottoms.

After the outfit matching page is displayed, the user may define the clothing matching on the outfit matching page. In response to the selection operation of the user on the outfit matching page, the at least one piece of try-on clothing currently selected by the user is determined as the target outfit matching content. The operation of combining the target outfit matching content with each virtual model, each try-on pose, and each try-on scenario is performed to obtain a plurality of try-on result images corresponding to the target outfit matching content.

Therefore, at least one try-on result image may be generated for each virtual model making different try-on poses in different try-on backgrounds based on the target outfit matching content.

In the content display method provided in this embodiment, the target outfit matching content is determined based on the trigger operation of the user, and the try-on result image is generated based on the target outfit matching content, such that the generated try-on result image is more in line with the personalized needs of the user, thereby improving the user experience.

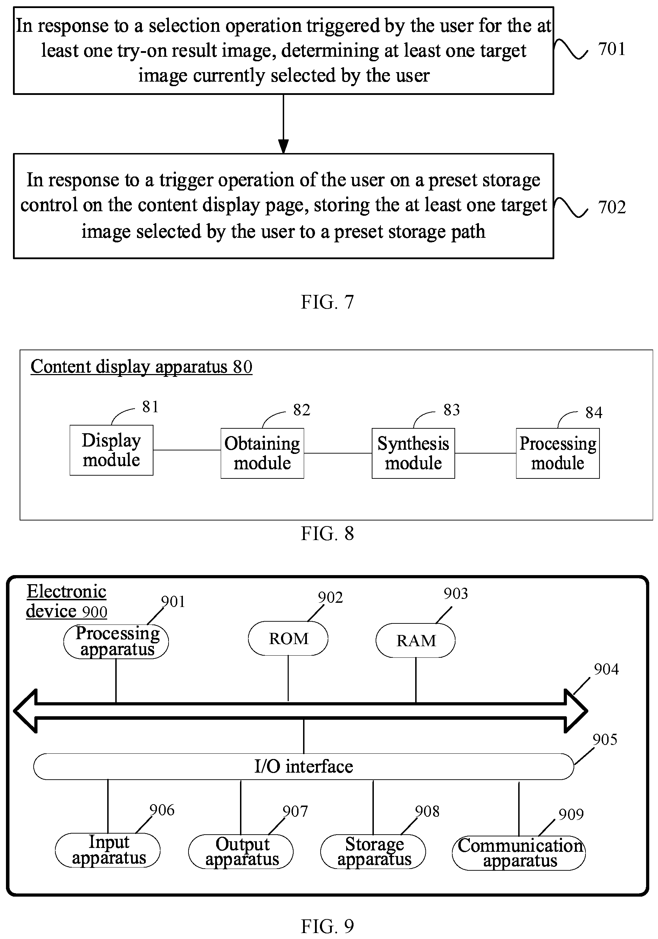

FIG. 7 is a schematic flowchart of a content display method according to another embodiment of the present disclosure. On the basis of any one of the above-mentioned embodiments, as shown in FIG. 7, after step 104, the method further includes the following steps:
step 701: in response to a selection operation triggered by the user for the at least one try-on result image, determining at least one target image currently selected by the user; and
step 702: in response to a trigger operation of the user on a preset storage control on the content display page, storing the at least one target image selected by the user to a preset storage path.

In this embodiment, after the at least one try-on result image is generated based on the at least one piece of try-on content generated by the user through customization, the user may also perform a storage operation on the at least one try-on result image according to actual needs.

Optionally, after the at least one try-on result image is displayed on the content display page, the user may select at least one target image from the at least one try-on result image according to actual needs. For example, the user may select one or more try-on result images. However, the embodiments of the present disclosure are not limited thereto.

In addition, the storage control may be provided on the content display page. In response to the trigger operation of the user on the preset storage control on the content display page, the at least one target image selected by the user may be stored to the preset storage path.

As a possible implementation, a share control may also be provided on the content display page. After the user selects the at least one target image, based on a trigger operation of the user on the share control, the at least one target image may be shared to a sharing channel currently selected by the user. The sharing channel includes, but is not limited to, a posting channel, a direct-message sending channel, etc.

In the content display method provided in this embodiment, the at least one target image is stored based on the selection operation of the user for the at least one try-on result image, such that the finally obtained target image is more in line with the personalized needs of the user, thereby improving the user experience.

FIG. 8 is a schematic structural diagram of a content display apparatus according to an embodiment of the present disclosure. As shown in FIG. 8, the apparatus includes: a display module 81, an obtaining module 82, a synthesis module 83, and a processing module 84. For example, the display module 81 is configured to display a preset content display page, display at least one try-on item on the content display page, display content associated with any try-on item, and hide content associated with other try-on items. The obtaining module 82 is configured to obtain at least one piece of try-on content corresponding to the at least one try-on item and generated by a user triggering the at least one try-on item. The synthesis module 83 is configured to, in response to a trigger operation of the user on a preset synthesis control on the content display page, perform an image synthesis operation based on at least one piece of try-on content corresponding to each try-on item, to obtain at least one try-on result image. The processing module 84 is configured to display the at least one try-on result image on the content display page.

Further, for example, on the basis of any one of the above-mentioned embodiments, the try-on item includes a virtual model item. The obtaining module is configured to: in response to a trigger operation of the user on the virtual model item, display at least one preset candidate virtual model on the content display page; and in response to a selection operation of the user for the at least one candidate virtual model, obtain at least one piece of try-on content corresponding to the virtual model item. Alternatively, the obtaining module is configured to: in response to a trigger operation of the user on the virtual model item, display, on the content display page, at least one virtual model selected by the user when performing a historical try-on operation; and determine the at least one virtual model historically selected by the user as at least one piece of try-on content corresponding to the virtual model item.

Further, for example, on the basis of any one of the above-mentioned embodiments, the try-on item includes a try-on pose item. The obtaining module is configured to: in response to a trigger operation of the user on the try-on pose item, display at least one preset candidate try-on pose on the content display page; and in response to a selection operation of the user for the at least one candidate try-on pose, obtain at least one piece of try-on content corresponding to the try-on pose item. Alternatively, the obtaining module is configured to: in response to a trigger operation of the user on the try-on pose item, display, on the content display page, at least one try-on pose selected by the user when performing a historical try-on operation; and determine the at least one try-on pose historically selected by the user as at least one piece of try-on content corresponding to the try-on pose item.

Further, for example, on the basis of any one of the above-mentioned embodiments, the try-on item includes a try-on background item. The obtaining module is configured to: in response to a trigger operation of the user on the try-on background item, display at least one preset candidate try-on background on the content display page; and in response to a selection operation of the user for the at least one candidate try-on background, obtain at least one piece of try-on content corresponding to the try-on background item. Alternatively, the obtaining module is configured to: in response to a trigger operation of the user on the try-on background item, display, on the content display page, at least one try-on background selected by the user when performing a historical try-on operation; and determine the at least one try-on background historically selected by the user as at least one piece of try-on content corresponding to the try-on background item.

Further, for example, on the basis of any one of the above-mentioned embodiments, the try-on item includes a clothing item. The obtaining module is configured to: in response to a trigger operation of the user on the clothing item, display a preset image generation control on the content display page; in response to a trigger operation of the user on the image generation control, obtain at least one image to be processed that is generated by the user; for each image to be processed, perform a recognition operation on clothing content in the image to be processed through a preset image processing algorithm, to obtain at least one piece of clothing content corresponding to the image to be processed; and determine at least one piece of try-on content corresponding to the clothing item based on at least one piece of clothing content corresponding to the at least one image to be processed.

Further, for example, on the basis of any one of the above-mentioned embodiments, the obtaining module is configured to: display, on the content display page, the at least one piece of clothing content corresponding to the at least one image to be processed; and in response to a selection operation triggered by the user for the at least one piece of clothing content, determine at least one piece of target clothing content currently selected by the user as the at least one piece of try-on content corresponding to the clothing item.

Further, for example, on the basis of any one of the above-mentioned embodiments, the content display page further includes a preset edit control. The apparatus further includes: a determination module configured to, in response to the selection operation triggered by the user for the at least one piece of clothing content, determine the at least one piece of target clothing content currently selected by the user; a display module configured to display a preset edit page in response to a trigger operation of the user on the edit control; and an obtaining module configured to obtain edit content generated by the user on the edit page, and perform an edit operation on the at least one piece of target clothing content based on the edit content, to obtain the at least one piece of try-on content corresponding to the clothing item.

Further, for example, on the basis of any one of the above-mentioned embodiments, the content display page includes a first display region and a second display region. For example, the first display region is used to display the at least one try-on item to be set and the content associated with any try-on item. The second display region is used to display at least one piece of try-on clothing corresponding to the clothing item and currently generated by the user.

Further, for example, on the basis of any one of the above-mentioned embodiments, the second display region includes a first sub-region and a second sub-region. For example, the first sub-region is used to display a thumbnail corresponding to the at least one piece of try-on clothing currently generated by the user. The second sub-region is used to display a try-on display effect obtained based on at least one piece of try-on content currently determined by the user.

Further, for example, on the basis of any one of the above-mentioned embodiments, the apparatus further includes: a display module configured to, in response to a preset trigger operation of the user in the first display region, hide the second sub-region, and increase a display size of the first display region, such that display sizes corresponding to the adjusted first display region and the first sub-region match a display size of a display interface.

Further, for example, on the basis of any one of the above-mentioned embodiments, the apparatus further includes: a determination module configured to, in response to a selection operation of the user for any try-on item, determine a target try-on item currently selected by the user; and a display module configured to display, on the content display page, the at least one try-on item and at least one piece of candidate try-on content that corresponds to the target try-on item.

Further, for example, on the basis of any one of the above-mentioned embodiments, the synthesis module is configured to: for each piece of try-on clothing, perform an operation of combining the try-on clothing with each virtual model, each try-on pose, and each try-on scenario, to obtain a plurality of try-on result images corresponding to the try-on clothing.

Further, for example, on the basis of any one of the above-mentioned embodiments, the apparatus further includes: a display module configured to, in response to an outfit matching operation triggered by the user, display a preset outfit matching page, and display, on the outfit matching page, all pieces of try-on clothing currently generated by the user; a determination module configured to, in response to a selection operation of the user on the outfit matching page, determine at least one piece of try-on clothing currently selected by the user as target outfit matching content; and a synthesis module configured to perform an operation of combining the target outfit matching content with each virtual model, each try-on pose, and each try-on scenario, to obtain a plurality of try-on result images corresponding to the target outfit matching content.

Further, for example, on the basis of any one of the above-mentioned embodiments, the apparatus further includes: a determination module configured to, in response to a selection operation triggered by the user for the at least one try-on result image, determine at least one target image currently selected by the user; and a storage module configured to, in response to a trigger operation of the user on a preset storage control on the content display page, store the at least one target image selected by the user to a preset storage path.

Further, for example, on the basis of any one of the above-mentioned embodiments, the apparatus further includes: a display module configured to display preset prompt information on the content display page in response to determining that the user triggers the try-on operation for the first time. The prompt information is used to instruct the user to generate the at least one piece of try-on content based on the at least one try-on item on the content display page according to the prompt information.

The apparatus provided in this embodiment may be configured to perform the technical solution of the above method embodiment. The implementation principle and technical effects thereof are similar, and are not described herein again in this embodiment.

To implement the above embodiments, an embodiment of the present disclosure further provides an electronic device. The electronic device includes: a processor and a memory.

The memory stores computer-executable instructions.

The processor executes the computer-executable instructions stored in the memory, to cause the processor to perform the content display method according to any one of the above embodiments.

FIG. 9 is a schematic structural diagram of an electronic device according to an embodiment of the present disclosure. As shown in FIG. 9, the electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 9 is merely an example, and shall not impose any limitation on the function and scope of use of the embodiments of the present disclosure.

As shown in FIG. 9, the electronic device 900 may include a processing apparatus (for example, a central processing unit or a graphics processing unit) 901 that may perform a variety of appropriate actions and processing based on a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk drive; and a communication apparatus 909. The communication apparatus 909 may allow the electronic device 900 to perform wireless or wired communication with other devices to exchange data. Although FIG. 9 shows the electronic device 900 having various apparatuses, it should be understood that it is not required to implement or have all of the shown apparatuses. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiments of the present disclosure are performed.

It should be noted that the computer-readable medium in this embodiment of the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

To implement the embodiments described above, an embodiment of the present disclosure further provides a computer-readable storage medium. The computer-readable storage medium has stored therein computer-executable instructions that, when executed by a processor, cause the content display method according to any one of the above-mentioned embodiments to be implemented.

To implement the embodiments described above, an embodiment of the present disclosure further provides a computer program product including a computer program, where the computer program, when executed by a processor, causes the content display method according to any one of the above-mentioned embodiments to be implemented.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to at least one embodiment of the present disclosure, a content display method is provided. The method includes: displaying a preset content display page, displaying at least one try-on item on the content display page, displaying content associated with any try-on item, and hiding content associated with other try-on items; obtaining at least one piece of try-on content corresponding to the at least one try-on item and generated by a user triggering the at least one try-on item; in response to a trigger operation of the user on a preset synthesis control on the content display page, performing an image synthesis operation based on at least one piece of try-on content corresponding to each try-on item, to obtain at least one try-on result image; and displaying the at least one try-on result image on the content display page.

In one example of the present disclosure, the at least one try-on item includes a virtual model item. Obtaining the at least one piece of try-on content corresponding to the at least one try-on item and generated by the user triggering the at least one try-on item includes: in response to a trigger operation of the user on the virtual model item, displaying at least one preset candidate virtual model on the content display page; and in response to a selection operation of the user for the at least one candidate virtual model, obtaining at least one piece of try-on content corresponding to the virtual model item. Alternatively, obtaining the at least one piece of try-on content corresponding to the at least one try-on item and generated by the user triggering the at least one try-on item includes: in response to a trigger operation of the user on the virtual model item, displaying, on the content display page, at least one virtual model selected by the user when performing a historical try-on operation; and determining the at least one virtual model historically selected by the user as at least one piece of try-on content corresponding to the virtual model item.

In one example of the present disclosure, the try-on item includes a try-on pose item. Obtaining the at least one piece of try-on content corresponding to the at least one try-on item and generated by the user triggering the at least one try-on item includes: in response to a trigger operation of the user on the try-on pose item, displaying at least one preset candidate try-on pose on the content display page; and in response to a selection operation of the user for the at least one candidate try-on pose, obtaining at least one piece of try-on content corresponding to the try-on pose item. Alternatively, obtaining the at least one piece of try-on content corresponding to the at least one try-on item and generated by the user triggering the at least one try-on item includes: in response to a trigger operation of the user on the try-on pose item, displaying, on the content display page, at least one try-on pose selected by the user when performing a historical try-on operation; and determining the at least one try-on pose historically selected by the user as at least one piece of try-on content corresponding to the try-on pose item.

In one example of the present disclosure, the try-on item includes a try-on background item. Obtaining the at least one piece of try-on content corresponding to the at least one try-on item and generated by the user triggering the at least one try-on item includes: in response to a trigger operation of the user on the try-on background item, displaying at least one preset candidate try-on background on the content display page; and in response to a selection operation of the user for the at least one candidate try-on background, obtaining at least one piece of try-on content corresponding to the try-on background item. Alternatively, obtaining the at least one piece of try-on content corresponding to the at least one try-on item and generated by the user triggering the at least one try-on item includes: in response to a trigger operation of the user on the try-on background item, displaying, on the content display page, at least one try-on background selected by the user when performing a historical try-on operation; and determining the at least one try-on background historically selected by the user as at least one piece of try-on content corresponding to the try-on background item.

In one example of the present disclosure, the try-on item includes a clothing item. Obtaining the at least one piece of try-on content corresponding to the at least one try-on item and generated by the user triggering the at least one try-on item includes: in response to a trigger operation of the user on the clothing item, displaying a preset image generation control on the content display page; in response to a trigger operation of the user on the image generation control, obtaining at least one image to be processed that is generated by the user; for each image to be processed, performing a recognition operation on clothing content in the image to be processed through a preset image processing algorithm, to obtain at least one piece of clothing content corresponding to the image to be processed; and determining at least one piece of try-on content corresponding to the clothing item based on at least one piece of clothing content corresponding to the at least one image to be processed.

In one example of the present disclosure, determining the at least one piece of try-on content corresponding to the clothing item based on the at least one piece of clothing content corresponding to the at least one image to be processed includes: displaying, on the content display page, the at least one piece of clothing content corresponding to the at least one image to be processed; and in response to a selection operation triggered by the user for the at least one piece of clothing content, determining at least one piece of target clothing content currently selected by the user as the at least one piece of try-on content corresponding to the clothing item.

In one example of the present disclosure, the content display page further includes a preset edit control. After displaying, on the content display page, the at least one piece of clothing content corresponding to the at least one image to be processed, the method further includes: in response to the selection operation triggered by the user for the at least one piece of clothing content, determining the at least one piece of target clothing content currently selected by the user; displaying a preset edit page in response to a trigger operation of the user on the edit control; and obtaining edit content generated by the user on the edit page, and performing an edit operation on the at least one piece of target clothing content based on the edit content, to obtain the at least one piece of try-on content corresponding to the clothing item.

In one example of the present disclosure, the content display page includes a first display region and a second display region, where the first display region is used to display the at least one try-on item to be set and the content associated with any try-on item; and the second display region is used to display at least one piece of try-on clothing corresponding to the clothing item and currently generated by the user.

In one example of the present disclosure, the second display region includes a first sub-region and a second sub-region, where the first sub-region is used to display a thumbnail corresponding to the at least one piece of try-on clothing currently generated by the user; and the second sub-region is used to display a try-on display effect obtained based on at least one piece of try-on content currently determined by the user.

In one example of the present disclosure, the method further includes: in response to a preset trigger operation of the user in the first display region, hiding the second sub-region, and increasing a display size of the first display region, such that display sizes corresponding to the adjusted first display region and the first sub-region match a display size of a display interface.

In one example of the present disclosure, the method further includes: in response to a selection operation of the user for any try-on item, determining a target try-on item currently selected by the user; and displaying, on the content display page, the at least one try-on item and at least one piece of candidate try-on content that corresponds to the target try-on item.

In one example of the present disclosure, performing the image synthesis operation based on the at least one piece of try-on content corresponding to each try-on item, to obtain the at least one try-on result image includes: for each piece of try-on clothing, performing an operation of combining the try-on clothing with each virtual model, each try-on pose, and each try-on scenario, to obtain a plurality of try-on result images corresponding to the try-on clothing.

In one example of the present disclosure, the method further includes: in response to an outfit matching operation triggered by the user, displaying a preset outfit matching page, and displaying, on the outfit matching page, all pieces of try-on clothing currently generated by the user; in response to a selection operation of the user on the outfit matching page, determining at least one piece of try-on clothing currently selected by the user as target outfit matching content; and performing an operation of combining the target outfit matching content with each virtual model, each try-on pose, and each try-on scenario, to obtain a plurality of try-on result images corresponding to the target outfit matching content.

In one example of the present disclosure, after displaying the at least one try-on result image on the content display page, the method further includes: in response to a selection operation triggered by the user for the at least one try-on result image, determining at least one target image currently selected by the user; and
in response to a trigger operation of the user on a preset storage control on the content display page, storing the at least one target image selected by the user to a preset storage path.

In one example of the present disclosure, after displaying the preset content display page, the method further includes: displaying preset prompt information on the content display page in response to determining that the user triggers the try-on operation for the first time, where the prompt information is used to instruct the user to generate the at least one piece of try-on content based on the at least one try-on item on the content display page according to the prompt information.

According to at least one embodiment of the present disclosure, a content display apparatus is provided. The apparatus includes: a display module configured to display a preset content display page, display at least one try-on item on the content display page, display content associated with any try-on item, and hide content associated with other try-on items; an obtaining module configured to obtain at least one piece of try-on content corresponding to the at least one try-on item and generated by a user triggering the at least one try-on item; a synthesis module configured to, in response to a trigger operation of the user on a preset synthesis control on the content display page, perform an image synthesis operation based on at least one piece of try-on content corresponding to each try-on item, to obtain at least one try-on result image; and a processing module configured to display the at least one try-on result image on the content display page.

The foregoing descriptions are merely example embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A content display method, comprising:
displaying a preset content display page, displaying at least one try-on item on the content display page, displaying content associated with any try-on item, and hiding content associated with other try-on items;
obtaining at least one piece of try-on content corresponding to the at least one try-on item and generated by a user triggering the at least one try-on item;
in response to a trigger operation of the user on a preset synthesis control on the content display page, performing an image synthesis operation based on at least one piece of try-on content corresponding to each try-on item, to obtain at least one try-on result image; and
displaying the at least one try-on result image on the content display page.

2. The method according to claim 1, wherein the at least one try-on item comprises a virtual model item; and
obtaining the at least one piece of try-on content corresponding to the at least one try-on item and generated by the user triggering the at least one try-on item comprises:
in response to a trigger operation of the user on the virtual model item, displaying at least one preset candidate virtual model on the content display page; and
in response to a selection operation of the user for the at least one candidate virtual model, obtaining the at least one piece of try-on content corresponding to the virtual model item;
or obtaining the at least one piece of try-on content corresponding to the at least one try-on item and generated by the user triggering the at least one try-on item comprises:
in response to a trigger operation of the user on the virtual model item, displaying, on the content display page, at least one virtual model selected by the user when performing a historical try-on operation; and
determining the at least one virtual model historically selected by the user as at least one piece of try-on content corresponding to the virtual model item.

3. The method according to claim 1 or 2, wherein the try-on item comprises a try-on pose item; and
obtaining the at least one piece of try-on content corresponding to the at least one try-on item and generated by the user triggering the at least one try-on item comprises:
in response to a trigger operation of the user on the try-on pose item, displaying at least one preset candidate try-on pose on the content display page; and
in response to a selection operation of the user for the at least one candidate try-on pose, obtaining at least one piece of try-on content corresponding to the try-on pose item;
or obtaining the at least one piece of try-on content corresponding to the at least one try-on item and generated by the user triggering the at least one try-on item comprises:
in response to a trigger operation of the user on the try-on pose item, displaying, on the content display page, at least one try-on pose selected by the user when performing a historical try-on operation; and
determining the at least one try-on pose historically selected by the user as at least one piece of try-on content corresponding to the try-on pose item.

4. The method according to any one of claims 1 to 3, wherein the try-on item comprises a try-on background item; and
obtaining the at least one piece of try-on content corresponding to the at least one try-on item and generated by the user triggering the at least one try-on item comprises:
in response to a trigger operation of the user on the try-on background item, displaying at least one preset candidate try-on background on the content display page; and
in response to a selection operation of the user for the at least one candidate try-on background, obtaining at least one piece of try-on content corresponding to the try-on background item;
or obtaining the at least one piece of try-on content corresponding to the at least one try-on item and generated by the user triggering the at least one try-on item comprises:
in response to a trigger operation of the user on the try-on background item, displaying, on the content display page, at least one try-on background selected by the user when performing a historical try-on operation; and
determining the at least one try-on background historically selected by the user as at least one piece of try-on content corresponding to the try-on background item.

5. The method according to any one of claims 1 to 4, wherein the try-on item comprises a clothing item; and
obtaining the at least one piece of try-on content corresponding to the at least one try-on item and generated by the user triggering the at least one try-on item comprises:
in response to a trigger operation of the user on the clothing item, displaying a preset image generation control on the content display page;
in response to a trigger operation of the user on the image generation control, obtaining at least one image to be processed that is generated by the user;
for each image to be processed, performing a recognition operation on clothing content in the image to be processed through a preset image processing algorithm, to obtain at least one piece of clothing content corresponding to the image to be processed; and
determining at least one piece of try-on content corresponding to the clothing item based on the at least one piece of clothing content corresponding to the at least one image to be processed.

6. The method according to claim 5, wherein determining the at least one piece of try-on content corresponding to the clothing item based on the at least one piece of clothing content corresponding to the at least one image to be processed comprises:
displaying, on the content display page, the at least one piece of clothing content corresponding to the at least one image to be processed; and
in response to a selection operation triggered by the user for the at least one piece of clothing content, determining at least one piece of target clothing content currently selected by the user as the at least one piece of try-on content corresponding to the clothing item.

7. The method according to claim 6, wherein the content display page further comprises a preset edit control; and
after displaying, on the content display page, the at least one piece of clothing content corresponding to the at least one image to be processed, the method further comprises:
in response to the selection operation triggered by the user for the at least one piece of clothing content, determining the at least one piece of target clothing content currently selected by the user;
displaying a preset edit page in response to a trigger operation of the user on the edit control; and
obtaining edit content generated by the user on the edit page, and performing an edit operation on the at least one piece of target clothing content based on the edit content, to obtain the at least one piece of try-on content corresponding to the clothing item.

8. The method according to any one of claims 1 to 7, wherein the content display page comprises a first display region and a second display region,
wherein the first display region is used to display the at least one try-on item to be set and the content associated with any try-on item; and
the second display region is used to display at least one piece of try-on clothing corresponding to the clothing item and currently generated by the user.

9. The method according to claim 8, wherein the second display region comprises a first sub-region and a second sub-region,
wherein the first sub-region is used to display a thumbnail corresponding to the at least one piece of try-on clothing currently generated by the user; and
the second sub-region is used to display a try-on display effect obtained based on at least one piece of try-on content currently determined by the user.

10. The method according to claim 9, further comprising:
in response to a preset trigger operation of the user in the first display region, hiding the second sub-region, and increasing a display size of the first display region, such that display sizes corresponding to the adjusted first display region and the first sub-region match a display size of a display interface.

11. The method according to claim 8, further comprising:
in response to a selection operation of the user for any try-on item, determining a target try-on item currently selected by the user; and
displaying, on the content display page, the at least one try-on item and at least one piece of candidate try-on content that corresponds to the target try-on item.

12. The method according to any one of claims 1 to 7, wherein performing the image synthesis operation based on the at least one piece of try-on content corresponding to each try-on item, to obtain the at least one try-on result image comprises:
for each piece of try-on clothing, performing an operation of combining the try-on clothing with each virtual model, each try-on pose, and each try-on scenario, to obtain a plurality of try-on result images corresponding to the try-on clothing.

13. The method according to any one of claims 1 to 7, further comprising:
in response to an outfit matching operation triggered by the user, displaying a preset outfit matching page, and displaying, on the outfit matching page, all pieces of try-on clothing currently generated by the user;
in response to a selection operation of the user on the outfit matching page, determining at least one piece of try-on clothing currently selected by the user as target outfit matching content; and
performing an operation of combining the target outfit matching content with each virtual model, each try-on pose, and each try-on scenario, to obtain a plurality of try-on result images corresponding to the target outfit matching content.

14. The method according to any one of claims 1 to 7, wherein after displaying the at least one try-on result image on the content display page, the method further comprises:
in response to a selection operation triggered by the user for the at least one try-on result image, determining at least one target image currently selected by the user; and
in response to a trigger operation of the user on a preset storage control on the content display page, storing the at least one target image selected by the user to a preset storage path.

15. The method according to any one of claims 1 to 7, wherein after displaying the preset content display page, the method further comprises:
displaying preset prompt information on the content display page in response to determining that the user triggers the try-on operation for the first time,
wherein the prompt information is used to instruct the user to generate the at least one piece of try-on content based on the at least one try-on item on the content display page according to the prompt information.

16. A content display apparatus, comprising:
a display module configured to display a preset content display page, display at least one try-on item on the content display page, display content associated with any try-on item, and hide content associated with other try-on items;
an obtaining module configured to obtain at least one piece of try-on content corresponding to the at least one try-on item and generated by a user triggering the at least one try-on item;
a synthesis module configured to, in response to a trigger operation of the user on a preset synthesis control on the content display page, perform an image synthesis operation based on at least one piece of try-on content corresponding to each try-on item, to obtain at least one try-on result image; and
a processing module configured to display the at least one try-on result image on the content display page.

17. An electronic device, comprising: a processor and a memory, wherein
the memory stores computer-executable instructions; and
the processor executes the computer-executable instructions stored in the memory, to cause the processor to perform the content display method according to any one of claims 1 to 15.

18. A computer-readable storage medium having stored therein computer-executable instructions that, when executed by a processor, cause the content display method according to any one of claims 1 to 15 to be implemented.

19. A computer program product comprising a computer program, wherein the computer program, when executed by a processor, causes the content display method according to any one of claims 1 to 15 to be implemented.
